# EUROPÄISCHE PATENTSCHRIFT

(11) **EP 3 732 608 B1**
(45) Veröffentlichungstag und Bekanntmachung des Hinweises auf die Patenterteilung: **10.08.2022**
(21) Anmeldenummer: 19707289.5
(22) Anmeldetag: 14.02.2019
(51) Int. Cl.: G06F 8/65, G06F 21/62, G06F 21/64, G06F 21/71, H04L 67/12

(54) **VERFAHREN ZUR RECHNERGESTÜTZTEN PARAMETRIERUNG EINES TECHNISCHEN SYSTEMS**
METHOD FOR THE COMPUTER-AIDED PARAMETERISATION OF A TECHNICAL SYSTEM
PROCÉDÉ DE PARAMÉTRAGE ASSISTÉ PAR ORDINATEUR D'UN SYSTÈME TECHNIQUE

(30) Priorität: 21.02.2018 DE 102018202626
(43) Veröffentlichungstag der Anmeldung: 04.11.2020
(73) Patentinhaber: Siemens Aktiengesellschaft, 80333 München (DE)
(72) Erfinder: BODE, Sebastian, 59229 Ahlen (DE)
(86) Internationale Anmeldenummer: PCT/EP2019/053616
(87) Internationale Veröffentlichungsnummer: WO 2019/162171

(56) Entgegenhaltungen:
- EP-A1- 3 101 535
- US-A1- 2005 256 614
- US-A1- 2016 378 990
- US-B1- 8 839 234

## Beschreibung

Die Erfindung betrifft ein Verfahren zur rechnergestützten Parametrierung eines technischen Systems sowie ein entsprechendes Computerprogrammprodukt und ein entsprechendes Computerprogramm.

Häufig besteht die Notwendigkeit, in einem technischen System bestimmte Parameter zu verändern bzw. neu einzustellen. Dabei gibt es Parameter, die grundlegende Einstellungen des technischen Systems betreffen und üblicherweise zentral und für eine Reihe von technischen Systemen gleich vorgegeben werden. Jedoch ist es oftmals auch erforderlich, Parameter für ein technisches System individuell einzustellen, wobei jedoch die entsprechenden Parameterwerte oder deren Grenzen zentral vorgegeben sein sollen.

Um die unbefugte Veränderung von Parametern in einem technischen System zu verhindern, sind aus dem Stand der Technik verschiedene Lösungen bekannt. Insbesondere können vorab implementierte proprietäre Schnittstellen vorgesehen sein, an denen sich befugte Personen autorisieren müssen, um Veränderungen an einem vorbestimmten Satz von Parametern vornehmen zu können. Diese Lösung ist aufwändig und wenig flexibel.

Darüber hinaus gibt es Ansätze, wonach zur Veränderung von Parametern eines technischen Systems zwingend eine Online-Verbindung erforderlich ist, die eine Überprüfung und Bestätigung der vorgesehenen Änderung ermöglicht. Solche Lösungen können zu Verzögerungen bei der Parameteränderung führen und sind mitunter schwer umsetzbar, z.B. wenn das technische System ein Schiff und insbesondere ein U-Boot ist.

Zur Beschränkung der Parameterveränderung auf bestimmte Autoritäten können mehrere unabhängige Hardwarekomponenten auf einem technischen System installiert sein, für welche jeweils separat ein autorisierter Zugriff festgelegt ist. Diese Lösung ist mit großem Aufwand und zusätzlichen Kosten verbunden.

Aus der EP3101535A1 ist ein Verfahren zur rechnergestützten Parametrierung eines Fahrzeugsystems in weitgehender Übereinstimmung mit dem Oberbegriff der unabhängigen Patentansprüche bekannt. Im dort offenbarten Verfahren wird auf dem Fahrzeugsystem ein Softwarepaket zur Installation eines Betriebssystems bzw. Guest Operating System hinterlegt, wobei das Softwarepaket mit einer digitalen Signatur signiert ist. Eine Gültigkeit der digitalen Signatur wird durch das Fahrzeugsystem überprüft. Falls diese Überprüfung ergibt, dass die digitale Signatur gültig ist, wird das Betriebssystem im Fahrzeugsystem installiert, wobei im Rahmen der Installation überprüft wird, ob eine Anzahl von Regeln, die zumindest teilweise in einem Prüfprogramm hinterlegt sind, durch externe digitale Informationen eines Supervisor Servers, die also von außerhalb des Softwarepakets stammen, eingehalten werden. Anschließend wird geprüft, ob eine Anzahl von Regeln (Rules) bzw. Bedingungen umfassend die Einhaltung der Regeln durch die externen digitalen Informationen vorliegt. Mit dem in der EP3101535A1 zwar nicht offenbarten, aber einem Fachmann zuordenbaren Wissen, dass ein Softwarepaket zur Installation eines Betriebssystems üblicherweise auch Konfigurationsdaten bezüglich einzustellender Systemparameter enthält, wird im Zuge der Installation des Betriebssystems (Guest Operating System) auch eine irgendwie geartete Parametereinstellung durch die im Betriebssystem enthaltenen Konfigurationsdaten im technischen System durchgeführt. Falls von Seiten des Supervisor Servers erkannt wird, dass eine Einhaltung einer oder mehrerer Regeln nicht gewährleistet ist, wird das Betriebssystem nicht installiert, das dort offenbarte Verfahren also abgebrochen.

Die Druckschrift US 2005/256614 A1 offenbart ein automatisiertes Software-Update von elektronischen Steuereinrichtungen eines Fahrzeugsystems, wobei der für die Installation erforderliche Fahrzeugzustand als Update-Kontrollparameter im zu installierenden Softwarepaket enthalten ist und vor der Installation des Softwarepakets die Gültigkeit einer digitalen Signatur des Softwarepakets überprüft wird.

Aufgabe der Erfindung ist es demgegenüber, ein alternatives Verfahren zur rechnergestützten Parametrierung eines technischen Systems zu schaffen.

Diese Aufgabe wird durch das Verfahren gemäß Patentanspruch 1 bzw. das Computerprogrammprodukt gemäß Patentanspruch 13 bzw. das Computerprogramm gemäß Patentanspruch 14 gelöst. Weiterbildungen der Erfindung sind in den abhängigen Ansprüchen definiert.

Das erfindungsgemäße Verfahren dient zur rechnergestützten Parametrierung eines technischen Systems. Der Begriff der Parametrierung ist dabei weit zu verstehen und kann jede Art von Veränderung von digitalen Informationen auf dem technischen System umfassen. Unter den Begriff der Parametrierung kann insbesondere auch das Löschen von Daten bzw. das erstmalige Hinterlegen von Daten auf dem technischen System fallen.

Im Rahmen des erfindungsgemäßen Verfahrens wird auf dem technischen System ein Softwarepaket (z.B. als Datei) hinterlegt, das mit einer ersten digitalen Signatur signiert ist und ein Prüfprogramm umfasst. Das Prüfprogramm kann beispielsweise als ein Script ausgestaltet sein. Der Begriff der ersten digitalen Signatur wird verwendet, um diese Signatur besser referenzieren zu können. Insbesondere ist es nicht zwangsläufig erforderlich, dass neben der ersten digitalen Signatur auch weitere digitale Signaturen im erfindungsgemäßen Verfahren verwendet werden. Die erste digitale Signatur gehört insbesondere zu einer vertrauenswürdigen Stelle, vorzugsweise dem Hersteller des Softwarepakets. Mit anderen Worten wurde die erste digitale Signatur durch ein Zertifikat einer vertrauenswürdigen Stelle erstellt. Der Begriff der Hinterlegung des Softwarepakets auf dem technischen System ist derart zu verstehen, dass das Softwarepaket auf einem entsprechenden Rechner bzw. Computer des technischen Systems gespeichert wird. Beispielsweise kann das Softwarepaket in einer Steuereinheit bzw. einem Controller hinterlegt sein, der zur Steuerung des Betriebs des technischen Systems vorgesehen ist.

Im erfindungsgemäßen Verfahren wird durch das technische System, d.h. durch einen entsprechenden Rechner des technischen Systems, die Gültigkeit der ersten digitalen Signatur überprüft. Hier und im Folgenden ist unter der Gültigkeitsüberprüfung einer digitalen Signatur eine Verifikationsprüfung der digitalen Signatur zu verstehen, wobei die Signatur dann als gültig eingestuft wird, wenn die Verifikationsprüfung erfolgreich ist. In der Regel erfolgt die Verifikationsprüfung mittels eines öffentlichen Schlüssels, der zu einem privaten Schlüssel gehört, mit dem die digitale Signatur erstellt wurde.

Falls die obige Überprüfung ergibt, dass die erste digitale Signatur gültig ist, wird das Softwarepaket auf dem technischen System (d.h. auf einem entsprechenden Rechner des technischen Systems) installiert, wobei im Rahmen der Installation das Prüfprogramm überprüft, ob eine Anzahl von Regeln, die zumindest teilweise im Prüfprogramm hinterlegt sind, durch externe digitale Informationen, die von außerhalb des Softwarepakets und vorzugsweise auch von außerhalb des technischen Systems stammen, eingehalten werden. Die Anzahl von Regeln kann dabei auch nur einen Teil der externen digitalen Informationen berücksichtigen.

Falls eine Anzahl von Bedingungen umfassend die Einhaltung der Anzahl von Regeln durch die externen digitalen Informationen vorliegt, wird eine Parametereinstellung im technischen System mittels der externen digitalen Informationen durchgeführt, wobei bei der Parametereinstellung auch nur ein Teil der externen digitalen Informationen einfließen kann. Liegt die Anzahl von Bedingungen nicht vor, wird das Verfahren abgebrochen. Gegebenenfalls kann die Anzahl von Bedingungen nur die Einhaltung der Anzahl von Regeln umfassen, jedoch können neben der Einhaltung der Anzahl von Regeln auch noch weitere Bedingungen vorgesehen sein, die nicht in der Anzahl von Regeln enthalten sind und beispielsweise direkt auf dem technischen System hinterlegt sind.

Das erfindungsgemäße Verfahren weist den Vorteil auf, dass auf einfache Weise über die Installation eines Softwarepakets eine Parametereinstellung in einem technischen System vorgenommen werden kann. Dabei können durch Veränderungen der nicht zu dem Softwarepaket gehörigen externen digitalen Informationen die Kriterien für eine zulässige Parametereinstellung flexibel angepasst werden. Insbesondere kann der Kreis der Personen flexibel verändert werden, der bestimmte Parameter auf dem technischen System einstellen darf.

In einer bevorzugten Ausführungsform umfassen die externen digitalen Informationen Konfigurationsdaten, welche den Betrieb des technischen Systems beeinflussen. Die Konfigurationsdaten können dabei beliebige Konfigurationsparameter betreffen, die im Betrieb des technischen Systems eine Rolle spielen, wie z.B. Kalibrierwerte.

In einer bevorzugten Variante ist in den Konfigurationsdaten ein jeweiliger Parameterwert für zumindest einen Konfigurationsparameter des technischen Systems spezifiziert, wobei als einzuhaltende Regel in der Anzahl von Regeln hinterlegt ist, dass der Parameterwert im technischen System zulässig ist. Diese Zulässigkeit wird vorzugsweise über einen zulässigen Wertebereich spezifiziert. Mit anderen Worten ist die entsprechende Regel eingehalten, wenn der Wert im zulässigen Wertebereich liegt.

Erfindungsgemäß können ggf. alle Regeln der Anzahl von Regeln im Prüfprogramm hinterlegt sein. In einer Variante ist jedoch ein Teil der Regeln aus der Anzahl von Regeln in den externen digitalen Informationen enthalten. Vorzugsweise sind dabei im Prüfprogramm eine oder mehrere Vorschriften enthalten, durch welche der Teil der Regeln aus einer Menge von Regeln in den externen digitalen Informationen ausgewählt wird, der auf Einhaltung überprüft wird.

In einer weiteren Ausgestaltung des erfindungsgemäßen Verfahrens werden das Softwarepaket und/oder die externen digitalen Informationen von einem tragbaren Datenträger über eine vorgegebene Kommunikationsschnittstelle auf das technische System (d.h. auf einen entsprechenden Rechner des technischen Systems) übertragen. Je nach Ausgestaltung kann die Datenübertragung dabei kontaktbehaftet oder kontaktlos erfolgen. Zum Beispiel kann der tragbare Datenträger ein USB-Stick sein, der durch einen Techniker mitgeführt wird, der den USB-Stick an das entsprechende technische System ansteckt, woraufhin das Softwarepaket bzw. die externen digitalen Informationen vom USB-Stick auf das technische System übertragen werden. Nichtsdestotrotz kann auch eine drahtlose Schnittstelle, wie z.B. Bluetooth oder Infrarot, zur Übertragung des Softwarepakets bzw. der externen digitalen Informationen von dem tragbaren Datenträger auf das technische System genutzt werden. Falls sowohl das Softwarepaket als auch die externen digitalen Informationen von einem tragbaren Datenträger auf das technische System übertragen werden, können das Softwarepaket und die externen digitalen Informationen auf dem gleichen tragbaren Datenträger gespeichert sein. Jedoch können auch zwei unterschiedliche tragbare Datenträger für das Softwarepaket und die externen digitalen Informationen verwendet werden.

In einer weiteren bevorzugten Variante des erfindungsgemäßen Verfahrens umfassen die externen digitalen Informationen digitale Daten, die mit einer zweiten digitalen Signatur signiert sind, bei der es sich um eine andere Signatur als die erste Signatur handelt. Insbesondere gehört die zweite digitale Signatur zu einer vertrauenswürdigen Stelle, welche die Berechtigung zur Änderung von bestimmten Parametern auf dem technischen System hat. Mit anderen Worten wurde die zweite digitale Signatur mit einem Zertifikat dieser vertrauenswürdigen Stelle erstellt. Zum Beispiel kann die zweite Signatur zu einem Techniker gehören, der mittels des Softwarepakets und der externen digitalen Informationen, die z.B. auf einem vom Techniker mitgeführten tragbaren Datenträger gespeichert sind, eine entsprechende Parametereinstellung an einem technischen System mittels des erfindungsgemäßen Verfahrens vornehmen soll.

In einer weiteren Ausgestaltung des erfindungsgemäßen Verfahrens enthält die Anzahl von Bedingungen, die zur Durchführung der Parametereinstellung vorliegen müssen, die Bedingung, dass das technische System eine zulässige Identifikation und/oder einen zulässigen Zustand aufweist und/oder dass der aktuelle Zeitpunkt der Installation des Softwarepakets in einem zulässigen Zeitfenster liegt und/oder dass das technische System nach Installation des Softwarepakets einen zulässigen Zustand aufweist und/oder dass die externen digitalen Informationen mindestens zwei unterschiedlichen Personen zugeordnet sind. Die Zuordnung der externen digitalen Informationen zu zwei oder mehr unterschiedlichen Personen kann beispielsweise durch die Prüfung entsprechender Signaturen überprüft werden. Mit der letzteren Bedingung kann erreicht werden, dass eine Parameteränderung nur gemeinsam durch mehrere Personen vorgenommen werden kann. Der obige Begriff des Zustands des technischen Systems ist weit zu verstehen und kann sich auf beliebige Zustände des technischen Systems beziehen, die in seinem Betrieb auftreten können. Die soeben genannten Bedingungen können entsprechende Regeln der Anzahl von Regeln darstellen. Jedoch kann es sich auch um zusätzliche Bedingungen handeln, die unabhängig von den Regeln des Prüfprogramms sind.

In einer weiteren Ausgestaltung des erfindungsgemäßen Verfahrens umfasst die Parametereinstellung am technischen System das Löschen von vorbestimmten Daten auf dem technischen System, wobei die Anzahl von Regeln die einzuhaltende Regel umfasst, dass die externen digitalen Informationen eine Empfangsbestätigung der zu löschenden Daten bei einer vorgegebenen Stelle umfassen. Beispielsweise kann es sich bei den zu löschenden Daten um Messdaten handeln, die im Rahmen einer Abrechnung verwendet werden und für welche sichergestellt werden muss, dass die Daten nicht gelöscht werden, bevor sie beispielsweise an eine entsprechende Abrechnungsstelle oder einen externen archivierenden Speicher übermittelt wurden.

In einer bevorzugten Variante der soeben beschriebenen Ausführungsform ist die Empfangsbestätigung mit einer digitalen Signatur der vorgegebenen Stelle signiert und die Anzahl von Regeln umfasst die einzuhaltende Regel, dass die digitale Signatur der dritten Stelle gültig ist. Hierdurch wird sichergestellt, dass die zu löschenden Daten auch vorab an die erwünschte dritte Stelle übermittelt wurden.

In einer weiteren Ausgestaltung des erfindungsgemäßen Verfahrens enthält das Softwarepaket neben dem Prüfprogramm weitere Software, die bei Vorliegen der Anzahl von Bedingungen im Rahmen der Installation des Softwarepakets auf dem technischen System installiert wird. Auf diese Weise kann auch die Installation weiterer Software auf dem technischen System an bestimmte Regeln geknüpft werden.

Bei dem technischen System, welches mit dem erfindungsgemäßen Verfahren parametriert wird, kann es sich um eine beliebige technische Vorrichtung bzw. eine beliebige technische Anlage bzw. ein beliebiges technisches Gerät handeln. Ein technisches System kann beispielsweise eine Ladesäule umfassen, insbesondere zum Laden von Elektrofahrzeugen. Ebenso kann das technische System eine Lichtzeichenanlage (z.B. eine Verkehrsampel) oder eine elektrische Energieerzeugungsanlage oder ein Steuersystem für eine industrielle Automatisierungsanlage umfassen. Die Energieerzeugungsanlage kann insbesondere eine regenerative Energieerzeugungsanlage sein, wie z.B. eine Windkraftanlage oder eine Photovoltaikanlage.

Neben dem oben beschriebenen Verfahren betrifft die Erfindung ein Computerprogrammprodukt mit einem auf einem maschinenlesbaren Träger gespeicherten Programmcode zur Durchführung des erfindungsgemäßen Verfahrens bzw. einer oder mehrerer bevorzugter Ausführungsformen des erfindungsgemäßen Verfahrens, wenn der Programmcode auf einem Computer ausgeführt wird. Der Programmcode umfasst somit das im erfindungsgemäßen Verfahren verwendete Softwarepaket.

Die Erfindung betrifft darüber hinaus ein Computerprogramm mit einem Programmcode zur Durchführung des erfindungsgemäßen Verfahrens bzw. einer oder mehrerer bevorzugter Ausführungsformen des erfindungsgemäßen Verfahrens. In Analogie zu dem Computerprogrammprodukt umfasst auch der Programmcode des Computerprogramms das im erfindungsgemäßen Verfahren verwendete Softwarepaket.

Ausführungsbeispiele der Erfindung werden nachfolgend anhand der beigefügten Figuren detailliert beschrieben.

Es zeigen:
- Fig. 1: eine schematische Darstellung eines beispielhaften Szenarios, in dem eine Variante des erfindungsgemäßen Verfahrens zum Einsatz kommt; und
- Fig. 2: ein Flussdiagramm, das den Ablauf einer Variante des erfindungsgemäßen Verfahrens verdeutlicht.

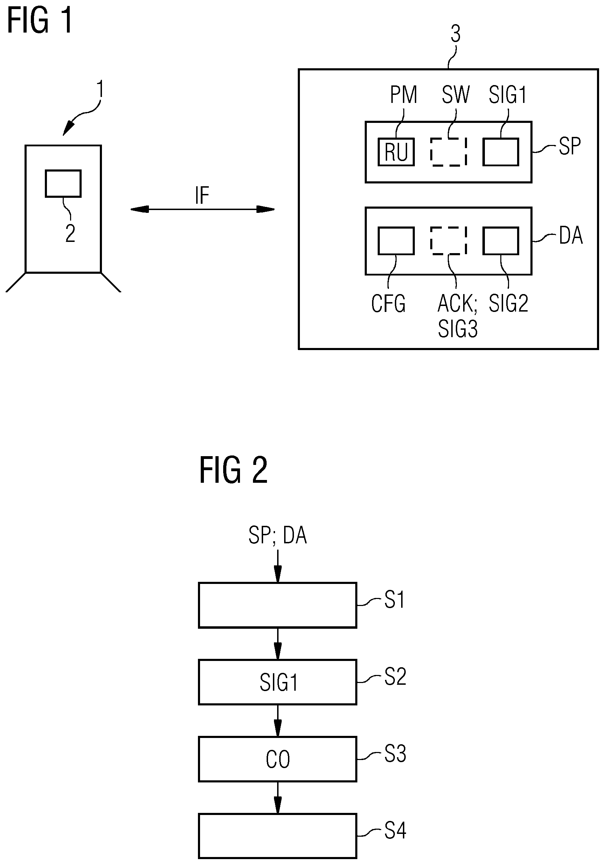

Nachfolgend wird das erfindungsgemäße Verfahren basierend auf der Parametrierung eines technischen Systems in der Form einer Ladesäule zum elektrischen Laden von Elektrofahrzeugen beschrieben, wobei die Ladesäule in Fig. 1 schematisch wiedergegeben ist und mit Bezugszeichen 1 bezeichnet ist. Nichtsdestotrotz kann das nachfolgend erläuterte Verfahren auch zur Parametrierung eines beliebigen anderen technischen Systems eingesetzt werden.

Die Ladesäule 1 enthält einen Controller 2, in dem digitale Daten betreffend den Betrieb der Ladesäule hinterlegt sind. Diese Daten berücksichtigt der Controller während des Betriebs des technischen Systems. Ziel des im Folgenden beschriebenen Verfahrens ist es dabei, diese digitalen Daten zu manipulieren. Diese Manipulation wird durch einen autorisierten Techniker initiiert, der einen tragbaren Datenträger 3, z.B. in der Form eines USB-Sticks, mit sich führt. Der tragbare Datenträger enthält ein Softwarepaket SP, das wiederum ein Prüfprogramm PM umfasst, welches im Folgenden auch als Prüfmodul bezeichnet wird und beispielsweise als Script ausgestaltet ist. Das Softwarepaket SP kann z.B. als Datei vorliegen und ist mit einer ersten digitalen Signatur SIG1 signiert. Diese Signatur wurde mit einem Zertifikat einer vertrauenswürdigen Stelle, beispielsweise einem Zertifikat des Herstellers des Softwarepakets, erstellt. In der hier beschriebenen Ausführungsform enthält das Softwarepaket SP nur das Prüfmodul PM als Software. Nichtsdestotrotz kann gegebenenfalls auch noch weitere Software SW in dem Softwarepaket SP enthalten sein, was in Fig. 1 durch ein gestricheltes Rechteck angedeutet ist.

In dem Prüfmodul PM ist eine vorbestimmte Anzahl von Regeln (d.h. zumindest eine Regel) RU hinterlegt, welche festlegen, in welcher Weise und unter welchen Bedingungen eine Parametereinstellung in dem Controller 2 der Ladesäule 1 durchgeführt werden soll. Die Anzahl von Regeln RU berücksichtigt dabei externe digitale Informationen, die nicht Bestandteil des Softwarepakets SP sind. Diese externen digitalen Informationen sind in der Ausführungsform der Fig. 1 digitale Daten DA, die auch auf dem tragbaren Datenträger 3 hinterlegt sind. Diese digitalen Daten, die z.B. als Datei vorliegen können, sind mit einer zweiten digitalen Signatur SIG2 signiert, über welche eine Berechtigung zur Parametereinstellung festgelegt wird. In einer bevorzugten Ausführungsform wurde die zweite digitale Signatur durch ein Zertifikat des Technikers erstellt, der den tragbaren Datenträger 3 mit sich führt.

Die digitalen Daten DA enthalten in der hier beschriebenen Ausführungsform Konfigurationsdaten CFG, welche einen oder mehrere Betriebsparameter der Ladesäule 1 betreffen. Optional können die digitalen Daten DA neben den Konfigurationsdaten auch eine Empfangsbestätigung ACK enthalten, wie durch ein gestricheltes Rechteck in Fig. 1 angedeutet ist. Diese Empfangsbestätigung ist basierend auf einem Zertifikat einer dritten Stelle mit einer Signatur SIG3 signiert ist. Eine solche Empfangsbestätigung wird beispielsweise dann benötigt, wenn im Rahmen der Parametereinstellung Messdaten an der Ladesäule 1 gelöscht werden sollen, wie weiter unten noch beschrieben wird.

In einer beispielhaften Variante des erfindungsgemäßen Verfahrens enthalten die Konfigurationsdaten CFG Dämpfungswerte, die in der Ladesäule 1 zur Kalibrierung der Pegel einer PLC-Verbindung (PLC = Power Line Communication) zu hinterlegen sind. Die PLC-Verbindung wird dabei im Rahmen des Ladens eines Elektrofahrzeugs zwischen Ladesäule und Elektrofahrzeug über das Ladekabel aufgebaut.

Um die Parametrierung der Ladesäule 1 basierend auf den Konfigurationsdaten CFG des tragbaren Datenträgers 3 zu bewirken, verbindet der Techniker den tragbaren Datenträger 3 über eine Schnittstelle IF (angedeutet durch einen Doppelpfeil) mit der Ladesäule. Ist der tragbare Datenträger ein USB-Stick, steckt der Techniker den USB-Stick an einen entsprechenden Eingang der Ladesäule an. Anschließend werden die Verfahrensschritte durchgeführt, die im Ablaufdiagramm der Fig. 2 gezeigt sind und welche im Folgenden näher erläutert werden.

Gemäß Schritt S1 werden das Softwarepaket SP und die digitalen Daten DA an den Controller 2 der Ladesäule 1 übertragen. In einem Schritt S2 wird in an sich bekannter Weise durch den Controller 2 die erste Signatur SIG1 auf deren Gültigkeit überprüft, d.h. es wird eine Verifikationsprüfung der Signatur durchgeführt. Nur wenn die Signatur SIG1 als gültig erkannt wird, wird zu dem Schritt S3 übergegangen. Ansonsten wird das Verfahren abgebrochen und gegebenenfalls eine entsprechende Meldung über eine Benutzerschnittstelle am technischen System ausgegeben.

In Schritt S3 wird das Softwarepaket SP auf dem Controller 2 der Ladesäule 1 installiert. Im Rahmen dieser Installation wird das Prüfmodul PM ausgeführt, welches überprüft, ob eine Anzahl von Bedingungen CO vorliegt bzw. erfüllt ist. Die Anzahl von Bedingungen enthält dabei die Einhaltung der Anzahl von Regeln RU, die in dem Prüfmodul PM hinterlegt sind. In der hier beschriebenen Ausführungsform umfassen die einzuhaltenden Regeln das Kriterium, dass die Werte jeweiliger Konfigurationsparameter aus den Konfigurationsdaten CFG (z.B. die oben genannten Dämpfungswerte) innerhalb vorbestimmter Plausibilitätsgrenzen liegen. Nur wenn dies der Fall ist, ist die entsprechende Regel eingehalten. Eine weitere einzuhaltende Regel besteht in dem hier beschriebenen Ausführungsbeispiel darin, dass die Signatur SIG2, mit der die digitalen Daten DA signiert ist, gültig ist.

Optional kann eine weitere einzuhaltende Regel die bereits oben erwähnte Empfangsbestätigung ACK betreffen. Diese Empfangsbestätigung ist nur dann in den digitalen Daten DA enthalten, wenn die dritte Stelle, zu der die Signatur SIG3 gehört, den Empfang von Daten bestätigt hat, die im Rahmen der Parametereinstellung auf dem Controller 2 zu löschen sind. Die zu löschenden Daten betreffen z.B. Messdaten, die im Zusammenhang mit einer Abrechnung stehen. Insbesondere umfassen die Messdaten den in einem bestimmten Zeitraum aus der Ladesäule bezogenen Strom. In der hier beschriebenen Ausführungsform enthalten die einzuhaltenden Regeln dabei die Regel, dass eine Empfangsbestätigung ACK in den Daten DA enthalten ist und darüber hinaus die Signatur SIG3, mit der die Empfangsbestätigung ACK signiert ist, gültig ist. Demzufolge wird in Schritt S3 sowohl das Vorhandensein der Empfangsbestätigung ACK als auch die Gültigkeit der Signatur SIG3 überprüft.

In der hier beschriebenen Ausführungsform betreffen die Bedingungen CO ausschließlich die Einhaltung der im Prüfmodul PM hinterlegten Regeln. Gegebenenfalls können die Bedingungen CO jedoch weitere Bedingungen umfassen, deren Vorliegen in Schritt S3 überprüft wird und welche nicht im Zusammenhang mit den Regeln RU stehen.

Am Ende von Schritt S3 wird festgestellt, ob alle Regeln RU eingehalten sind bzw. alle Bedingungen CO vorliegen. Ist dies nicht der Fall, wird das Verfahren abgebrochen und gegebenenfalls wiederum eine Meldung über eine Benutzerschnittstelle an der Ladesäule ausgegeben. Sind jedoch alle Regeln RU eingehalten bzw. alle Bedingungen CO erfüllt, wird zu Schritt S4 übergegangen. In Schritt S4 wird unter Berücksichtigung der Daten DA die Parametereinstellung in der Ladesäule 1 vorgenommen. In der hier beschriebenen Ausführungsform werden entsprechende Werte von Konfigurationsparametern aus den Konfigurationsdaten CFG vom Controller 2 zur Steuerung der Ladesäule 1 übernommen. Sollten die Daten DA auch die Empfangsbestätigung ACK mit gültiger Signatur SIG3 enthalten, werden ferner diejenigen Daten gelöscht, die in der Empfangsbestätigung ACK spezifiziert sind. Gegebenenfalls können die gelöschten Daten dann mit neuen Werten überschrieben werden, wobei die neuen Werte in den Daten DA enthalten sind.

Die im Vorangegangenen beschriebenen Ausführungsformen der Erfindung weisen eine Reihe von Vorteilen auf. Insbesondere kann einfach und flexibel ein technisches System über die Installation eines Softwarepakets parametriert werden. Dabei kann über Regeln im Softwarepaket sowie weitere externe digitale Informationen flexibel festgelegt werden, welche Autoritäten welche Parameter in welcher Weise manipulieren dürfen.

## Patentansprüche

1. Verfahren zur rechnergestützten Parametrierung eines technischen Systems (1), bei dem auf dem technischen System (1) ein Softwarepaket (SP) hinterlegt wird, das mit einer ersten digitalen Signatur (SIG1) signiert ist, wobei
- durch das technische System (1) die Gültigkeit der ersten digitalen Signatur (SIG1) überprüft wird;
- falls die erste digitale Signatur (SIG1) gültig ist, das Softwarepaket (SP) auf dem technischen System (1) installiert wird und im Rahmen der Installation ein Prüfprogramm (PM) überprüft, ob eine Anzahl von Regeln (RU), die zumindest teilweise im Prüfprogramm (PM) hinterlegt sind, durch externe digitale Informationen (DA), die von außerhalb des Softwarepakets (SP) stammen, eingehalten werden;
- falls eine Anzahl von Bedingungen (CO) umfassend die Einhaltung der Anzahl von Regeln (RU) durch die externen digitalen Informationen (DA) vorliegt, eine Parametereinstellung im technischen System (1) durchgeführt wird und ansonsten das Verfahren abgebrochen wird **dadurch gekennzeichnet,**
- **dass** das Softwarepaket (SP) das Prüfprogramm (PM) umfasst; und;
- **dass** die Parametereinstellung mittels der externen digitalen Informationen (DA) durchgeführt wird.

2. Verfahren nach Anspruch 1, wobei die externen digitalen Informationen (DA) Konfigurationsdaten (CFG) umfassen, welche den Betrieb des technischen Systems beeinflussen.

3. Verfahren nach Anspruch 2, wobei in den Konfigurationsdaten (CFG) ein jeweiliger Parameterwert für zumindest einen Konfigurationsparameter des technischen Systems spezifiziert ist und als einzuhaltende Regel in der Anzahl von Regeln (RU) hinterlegt ist, dass der jeweilige Parameterwert im technischen System (1) zulässig ist.

4. Verfahren nach einem der vorhergehenden Ansprüche, wobei ein Teil der Regeln (RU) aus der Anzahl von Regeln (RU) in den externen digitalen Informationen (DA) enthalten ist.

5. Verfahren nach Anspruch 4, wobei im Prüfprogramm (PM) eine oder mehrere Vorschriften enthalten sind, durch welche der Teil der Regeln (RU) aus einer Menge von Regeln (RU) in den externen digitalen Informationen (DA) ausgewählt wird, der auf Einhaltung überprüft wird.

6. Verfahren nach einem der vorhergehenden Ansprüche, wobei das Softwarepaket (SP) und/oder die externen digitalen Informationen (DA) von einem tragbaren Datenträger (3) über eine vorgegebene Kommunikationsschnittstelle (IF) auf das technische System (1) übertragen werden.

7. Verfahren nach einem der vorhergehenden Ansprüche, wobei die externen digitalen Informationen (DA) digitale Daten umfassen, die mit einer zweiten digitalen Signatur (SIG2) signiert sind, wobei die Anzahl von Regeln (RU) die einzuhaltende Regel umfasst, dass die zweite digitale Signatur (SIG2) gültig ist.

8. Verfahren nach einem der vorhergehenden Ansprüche, wobei die Anzahl von Bedingungen (CO) die Bedingung umfasst, dass das technische System (1) eine zulässige Identifikation und/oder einen zulässigen Zustand aufweist und/oder dass der aktuelle Zeitpunkt der Installation des Softwarepakets (SP) in einem zulässigen Zeitfenster liegt und/oder das technische System (1) nach Installation des Softwarepakets (SP) einen zulässigen Zustand aufweist und/oder dass die externen digitalen Informationen (DA) mindestens zwei unterschiedlichen Personen zugeordnet sind.

9. Verfahren nach einem der vorhergehenden Ansprüche, wobei die Parametereinstellung im technischen System das Löschen von vorbestimmten Daten auf dem technischen System (1) umfasst, wobei die Anzahl von Regeln (RU) die einzuhaltende Regel umfasst, dass die externen digitalen Informationen (DA) eine Empfangsbestätigung (ACK) der zu löschenden Daten bei einer vorgegebenen Stelle umfassen.

10. Verfahren nach Anspruch 9, wobei die Empfangsbestätigung (ACK) mit einer digitalen Signatur (SIG3) der vorgegebenen Stelle signiert ist und die Anzahl von Regeln (RU) die einzuhaltende Regel umfasst, dass die digitale Signatur (SIG3) der vorgegebenen Stelle gültig ist.

11. Verfahren nach einem der vorhergehenden Ansprüche, wobei das Softwarepaket (SP) neben dem Prüfprogramm (PM) weitere Software (SW) enthält, die bei Vorliegen der Anzahl von Bedingungen (CO) im Rahmen der Installation des Softwarepakets (SP) auf dem technischen System (1) installiert wird.

12. Verfahren nach einem der vorhergehenden Ansprüche, wobei das technische System (1) eine Ladesäule, insbesondere zum Laden von Elektrofahrzeugen, oder eine Lichtzeichenanlage oder eine elektrische Energieerzeugungsanlage oder ein Steuersystem für eine industrielle Automatisierungsanlage umfasst.

13. Computerprogrammprodukt mit einem auf einem maschinenlesbaren Träger gespeicherten Programmcode zur Durchführung eines Verfahrens nach einem der vorhergehenden Ansprüche, wenn der Programmcode auf einem Computer ausgeführt wird.

14. Computerprogramm mit einem Programmcode zur Durchführung eines Verfahrens nach einem der Ansprüche 1 bis 12, wenn der Programmcode auf einem Computer ausgeführt wird.

## Claims

1. Method for the computer-aided parameterization of a technical system (1), in which a software package (SP) is stored on the technical system (1), which software package is signed with a first digital signature (SIG1), wherein
- the validity of the first digital signature (SIG1) is checked by the technical system (1);
- if the first digital signature (SIG1) is valid, the software package (SP) is installed on the technical system (1) and, in the course of the installation, a test program (PM) checks whether a number of rules (RU) that are stored at least in part in the test program (PM) are complied with by external digital information (DA) that originates from outside the software package (SP);
- if a number of conditions (CO), comprising the external digital information (DA) complying with the number of rules (RU), are present, a parameter setting is performed in the technical system (1) and otherwise the method is terminated,
**characterized**
- **in that** the software package (SP) comprises the test program (PM); and;
- **in that** the parameter setting is performed by way of the external digital information (DA).

2. Method according to Claim 1, wherein the external digital information (DA) comprises configuration data (CFG) that influence the operation of the technical system.

3. Method according to Claim 2, wherein the configuration data (CFG) specify a respective parameter value for at least one configuration parameter of the technical system and the fact that the respective parameter value is permissible in the technical system (1) is stored as a rule to be complied with in the number of rules (RU).

4. Method according to one of the preceding claims, wherein some of the rules (RU) from the number of rules (RU) are contained in the external digital information (DA).

5. Method according to Claim 4, wherein the test program (PM) contains one or more specifications by way of which that portion of the rules (RU) that is checked for compliance is selected from a set of rules (RU) in the external digital information (DA).

6. Method according to one of the preceding claims, wherein the software package (SP) and/or the external digital information (DA) is transferred from a portable data carrier (3) to the technical system (1) via a predefined communication interface (IF) .

7. Method according to one of the preceding claims, wherein the external digital information (DA) comprises digital data that are signed with a second digital signature (SIG2), wherein the number of rules (RU) comprises the rule to be complied with whereby the second digital signature (SIG2) is valid.

8. Method according to one of the preceding claims, wherein the number of conditions (CO) comprises the condition whereby the technical system (1) has a permissible identification and/or a permissible state and/or whereby the current time of the installation of the software package (SP) is within a permissible time window and/or the technical system (1) has a permissible state following installation of the software package (SP) and/or whereby the external digital information (DA) is assigned to at least two different people.

9. Method according to one of the preceding claims, wherein the parameter setting in the technical system comprises deleting predetermined data on the technical system (1), wherein the number of rules (RU) comprises the rule to be complied with whereby the external digital information (DA) comprises a confirmation of receipt (ACK) of the data to be deleted at a predefined authority.

10. Method according to Claim 9, wherein the confirmation of receipt (ACK) is signed with a digital signature (SIG3) of the predefined authority and the number of rules (RU) comprises the rule to be complied with whereby the digital signature (SIG3) of the predefined authority is valid.

11. Method according to one of the preceding claims, wherein the software package (SP) contains, in addition to the test program (PM), further software (SW) that is installed when the number of conditions (CO) are present in the course of the installation of the software package (SP) on the technical system (1).

12. Method according to one of the preceding claims, wherein the technical system (1) comprises a charging column, in particular for charging electric vehicles, or a traffic signal installation or an electrical energy generation installation or a control system for an industrial automation installation.

13. Computer program product containing a program code stored on a machine-readable carrier for performing a method according to one of the preceding claims when the program code is executed on a computer.

14. Computer program containing a program code for performing a method according to one of Claims 1 to 12 when the program code is executed on a computer.

## Revendications

1. Procédé destiné au paramétrage assisté par ordinateur d'un système technique (1), dans lequel un paquet logiciel (SP), qui est signé avec une première signature numérique (SIG1), est enregistré sur le système technique (1) dans lequel
- la validité de la première signature numérique (SIG1) est vérifiée par le biais du système technique (1) ;
- dans le cas où la première signature numérique (SIG1) est valide, le paquet logiciel (SP) est installé sur le système technique (1) et dans le cadre de l'installation un programme de vérification (PM) vérifie si un nombre de règles (RU) qui sont enregistrées au moins en partie dans le programme de vérification (PM) sont respectées par le biais d'informations numériques externes (DA) qui proviennent de l'extérieur du paquet logiciel (SP) ;
- dans le cas où un nombre de conditions (CO) comprenant le respect du nombre de règles (RU) par le biais des informations numériques externes (DA) est présent, un réglage de paramètres est réalisé dans le système technique (1) et autrement le procédé est interrompu,
**caractérisé**
- **en ce que** le paquet logiciel (SP) comprend le programme de vérification (PM) ;
et
- **en ce que** le réglage de paramètres est réalisé au moyen des informations numériques externes (DA).

2. Procédé selon la revendication 1, dans lequel les informations numériques externes (DA) comprennent des données de configuration (CFG) qui influencent le fonctionnement du système technique.

3. Procédé selon la revendication 2, dans lequel une valeur de paramètre respective pour au moins un paramètre de configuration du système technique est spécifiée dans les données de configuration (CFG) et est enregistrée en tant que règle à respecter dans le nombre de règles (RU) selon laquelle la valeur de paramètre respective est admissible dans le système technique (1).

4. Procédé selon l'une quelconque des revendications précédentes, dans lequel une partie des règles (RU) provenant du nombre de règles (RU) est contenue dans les informations numériques externes (DA).

5. Procédé selon la revendication 4, dans lequel une ou plusieurs dispositions sont contenues dans le programme de vérification (PM), par le biais desquelles la partie des règles (RU) est sélectionnée à partir d'une quantité de règles (RU) dans les informations numériques externes (DA), dont le respect est vérifié.

6. Procédé selon l'une quelconque des revendications précédentes, dans lequel le paquet logiciel (SP) et/ou les informations numériques externes (DA) sont transmises par un support de données portable (3) au système technique (1) par l'intermédiaire d'une interface de communication prédéfinie (IF).

7. Procédé selon l'une quelconque des revendications précédentes, dans lequel les informations numériques externes (DA) comprennent des données numériques qui sont signées avec une deuxième signature numérique (SIG2), dans lequel le nombre de règles (RU) comprend la règle à respecter, selon laquelle la deuxième signature numérique (SIG2) est valide.

8. Procédé selon l'une quelconque des revendications précédentes, dans lequel le nombre de conditions (CO) comprend la condition selon laquelle le système technique (1) présente une identification admissible et/ou un état admissible et/ou selon laquelle le moment actuel de l'installation du paquet logiciel (SP) se trouve dans une fenêtre de temps admissible et/ou le système technique (1) présente après l'installation du paquet logiciel (SP) un état admissible et/ou selon laquelle les informations numériques externes (DA) sont associées à au moins deux personnes différentes.

9. Procédé selon l'une quelconque des revendications précédentes, dans lequel le réglage de paramètres dans le système technique comprend la suppression de données prédéterminées sur le système technique (1), dans lequel le nombre de règles (RU) comprend la règle à respecter selon laquelle les informations numériques externes (DA) comprennent une confirmation de réception (ACK) des données à supprimer dans un endroit prédéfini.

10. Procédé selon la revendication 9, dans lequel la confirmation de réception (ACK) est signée avec une signature numérique (SIG3) de l'endroit prédéfini et le nombre de règles (RU) comprend la règle à respecter que la signature numérique (SIG3) de l'endroit prédéfini est valide.

11. Procédé selon l'une quelconque des revendications précédentes, dans lequel le paquet logiciel (SP) contient outre le programme de vérification (PM) un logiciel supplémentaire (SW) qui, en présence du nombre de conditions (CO),est installé sur le système technique (1) dans le cadre de l'installation du paquet logiciel (SP).

12. Procédé selon l'une quelconque des revendications précédentes, dans lequel le système technique (1) comprend une colonne de charge, destinée en particulier à la charge de véhicules électriques, ou des feux de signalisation ou une centrale électrique ou un système de commande pour une installation d'automatisation industrielle.

13. Produit de programme informatique avec un code de programme mis en mémoire sur un support lisible par machine destiné à la réalisation d'un procédé selon l'une quelconque des revendications précédentes lorsque le code de programme est exécuté sur un ordinateur.

14. Programme informatique avec un code de programme destiné à la réalisation d'un procédé selon l'une quelconque des revendications 1 à 12 lorsque le code de programme est exécuté sur un ordinateur.
